# EUROPEAN PATENT APPLICATION

(11) **EP 2 829 569 A1**
(43) Date of publication of application: **28.01.2015**
(21) Application number: 13764651.9
(22) Date of filing: 19.03.2013
(51) Int. Cl.: C08J 5/24, B29C 70/10, B29K 105/08

(54) **CARBON FIBER PREFORM, CARBON FIBER REINFORCED PLASTIC, AND METHOD FOR PRODUCING CARBON FIBER PREFORM**

(30) Priority: 19.03.2012 JP 2012061510
(71) Applicant: Toray Industries, Inc., Tokyo 103-8666 (JP)
(72) Inventor: NAGASAKI, Kentaro, Otsu-shi Shiga 520-8558 (JP); SUZUKI, Tamotsu, Otsu-shi Shiga 520-8558 (JP); TSUJI, Haruhiko, Otsu-shi Shiga 520-8558 (JP)
(74) Representative: Hoefer & Partner
(86) International application number: PCT/JP2013/001863
(87) International publication number: WO 2013/140786

(57) **Abstract**

An object is to manufacture a preform having an insulating material by equipment of simplified configuration.

Solution

A carbon fiber preform has a plurality of carbon fiber sheets that are stacked and are bonded to each other by means of an adhesive resin having thermal plasticity. This carbon fiber preform comprises a partial-conducting layer arranged at least either between at least one pair of adjacent layers of the plurality of carbon fiber sheets or on a surface area of the plurality of carbon fiber sheets and configured to have a resistance area which has higher electric resistance than electric resistance of the carbon fiber sheet in a stacking direction and a conductive area which is capable of having electrical continuity in the stacking direction, wherein the resistance area and the conductive area are arranged in a surface direction orthogonal to the stacking direction. The plurality of carbon fibers sheets are bonded to each other by means of the adhesive resin in the surface direction in the conductive area and in an area corresponding to periphery of the conductive area. In areas other than the conductive area and the area corresponding to the periphery of the conductive area, the plurality of carbon fiber sheets are not bonded to each other by means of the adhesive resin.

## Description

### Technical Field

The present invention relates to a carbon fiber preform.

### Background Art

Carbon fiber-reinforced plastic has been known widely as the composite material of the enhanced resin strength. The carbon fiber-reinforced plastic is manufactured, for example, by impregnating a carbon fiber-containing base material (hereinafter referred to as "carbon fiber preform" or simply as "preform") with a thermosetting resin and applying heat. One known type of carbon fiber preform is manufactured by stacking a plurality of carbon fiber sheets and bonding adjacent layers of the respective sheets to each other. Techniques employable to bond the plurality of stacked carbon fiber sheets include method of locating a layered structure of a plurality of carbon fiber sheets in a heated mold and applying a pressure, conduction heating method, induction heating method and ultrasonic welding method. In these techniques, a general procedure heats and melts a resin located between adjacent layers of the carbon fiber sheets, a resin located on the surface of the carbon fiber sheet or a resin with which the carbon fiber sheet is impregnated, and subsequently cools and solidifies the melted resin, so as to bond the carbon fiber sheets to each other.

### Prior Art Documents

### Patent Documents:

Patent Document 1: JP S58-155926A
Patent Document 2: JP S59-2815A
Patent Document 3: JP 2009-73132A

### Non-Patent Documents:

Non-Patent Document 1: Masatobu Kawagoe and three others "Fundamental Study on Melting Method Using Electric Resistance of CFRP Joint", JCCM-2, Proceedings 2011, Paper #2B-07

### Summary of the Invention

### Problems to be Solved by the Invention

The various techniques described above have both advantages and drawbacks. Conventionally, the method of bonding the plurality of stacked carbon fiber sheets to one another should thus be selected according to the application of the carbon fiber preform. For example, the method using the heated mold needs a long time and a large amount of energy to increase the temperature of the mold and subsequently decrease the temperature of the mold. The conduction heating method, the induction heating method and the ultrasonic welding method, on the other hand, achieve bonding in a relative short time. The ultrasonic welding method, however, needs a device (horn) as the source of ultrasonic wave, and the induction heating method needs a device (coil) as the source of magnetic field. This increases the equipment cost. The ultrasonic welding method is readily employed to bond carbon fiber sheets in a planar shape but has difficulty in arrangement of carbon fiber sheets in a three-dimensional shape in a mold and accordingly has restrictions.

The conduction heating method, on the other hand, uses the mold itself as the electrodes and generates heat by taking advantage of the contact resistance between adjacent layers of the plurality of carbon fiber sheets. The equipment used accordingly has the simplified configuration. The conduction heating method is, however, unsuitable for manufacturing a certain type of preform having an insulating material in the middle of the current application pathway (for example, a preform having a glass fiber sheet located between adjacent layers of carbon fiber sheets or on the surface layer of a layered structure). This is because the presence of the insulating material interferes with application of electric current in the stacking direction and thus fails to heat and melt a resin used as adhesive resin by using heat of resistance. In this case, the electric current may be applied in the surface direction of the carbon fiber sheets to generate heat by using the intrinsic resistance of the carbon fiber sheets, so as to heat and melt the resin. This procedure, however, needs electrodes for each of the plurality of carbon fiber sheets, thus complicating the configuration of the equipment.

Additionally, in the case of bonding the entire surface of the carbon fiber sheets by the conduction heating method, high current flows through the carbon fiber sheets, due to the low electric resistance. This instantaneously requires an extremely large amount of energy. This results in difficulty in bonding carbon fiber sheets of large areas. Additionally, in the case of bonding the entire surface of the carbon fiber sheets, the entire surface is fixed. The resulting preform is unlikely to have sufficient repulsive force in the thickness direction (stacking direction) required when the preform is located in a mold in a resin molding process after manufacture of the preform. The insufficient repulsive force of the preform in the thickness direction in the mold forms a gap between the preform and an upper mold and a gap between the preform and a lower mold. This leaves a large amount of the resin injected for molding in the gaps and may thus cause some failure.

By taking into account the foregoing, there is a need to manufacture a preform having an insulating material by equipment of the simplified configuration. There is also a need to manufacture the preform in a short time by taking into account the time required for post-process after manufacture of the preform. There is also a need to provide a preform having the repulsive force in the stacking direction of carbon fiber sheets. There is further a need to reduce energy required for manufacturing the preform.

### Means for Solving the Problems

The present invention is made to solve at least part of the problems described above and may be implemented by the following aspects or embodiments.

### [Aspect 1]

There is provided a carbon fiber preform having a plurality of carbon fiber sheets that are stacked and are bonded to each other by means of an adhesive resin having thermal plasticity. The carbon fiber preform comprises a partial-conducting layer configured to have a resistance area which has higher electric resistance than electric resistance of the carbon fiber sheet in a stacking direction of the carbon fiber sheets, and a conductive area which has lower electric resistance than the electric resistance of the resistance area in the stacking direction. The resistance area and the conductive area are distributed in a surface direction orthogonal to the stacking direction. The partial-conducting layer is arranged at least in one of a location between at least one pair of adjacent carbon fiber sheets out of the plurality of carbon fiber sheets and a location on a surface layer of the carbon fiber preform. The plurality of carbon fiber sheets are bonded to each other by means of the adhesive resin in the conductive area provided in the partial-conducting layer and in an area corresponding to periphery of the conductive area.

The carbon fiber preform of this configuration may be manufactured by conduction heating method. More specifically, the conduction heating method applies electric current to the carbon fiber sheets in the stacking direction through the conductive area of the partial-conducting layer, so as to bond the carbon fiber sheets to each other. This enables the carbon fiber preform to be manufactured in a relatively short time. Only one pair of electrodes provided in the stacking direction are sufficient for the conduction heating method. This enables the carbon fiber preform to be manufactured by equipment of the simplified configuration. The conductive area having lower electric resistance in the stacking direction than that of the resistance area may be regarded as "current-carrying area" or "readily conducting area". The electric resistance of the conductive area in the stacking direction may be lower than the electric resistance of the carbon fiber sheet or may be higher than the electric resistance of the carbon fiber sheet. The partial-conducting layer may further include an area having medium electrical resistance between the electrical resistance of the resistance area and the electrical resistance of the conductive area.

### [Aspect 2]

In the carbon fiber preform according to Aspect 1, the plurality of carbon fiber sheets may be not bonded to each other by means of the adhesive resin in at least part of the resistance area.

The carbon fiber sheets may be bonded to each other by means of the adhesive resin in another part of the resistance area.

This configuration ensures the repulsive force of the carbon fiber sheets in the stacking direction, compared with the configuration of bonding the entire surface of the carbon fiber sheets.

### [Aspect 3]

In the carbon fiber preform according to either Aspect 1 or Aspect 2, the partial-conducting layer may be made of an insulating sheet, and the conductive area may include an opening formed to pass through the insulating sheet in the stacking direction.

The carbon fiber preform of this configuration simplifies the structure of the partial-conducting layer. This results in reducing the cost of the carbon fiber preform and simplifying the manufacturing process of the carbon fiber preform.

### [Aspect 4]

In the carbon fiber preform according to any one of Aspects 1 to 3, the conductive area may have an area that is greater than 1% of an entire area of the carbon fiber sheet.

In the carbon fiber preform of this configuration, the conductive area of greater than 1% causes the carbon fiber sheets to be bonded to each other to such an extent that retains the shape of the preform.

### [Aspect 5]

In the carbon fiber preform according to any one of Aspects 1 to 4, the conductive area may have an area that is not greater than 20% of an entire area of the carbon fiber sheet.

The carbon fiber preform of this configuration reduces the energy required in the manufacturing process. More specifically, this reduces the amount of electric power required for conduction heating.

The invention may be implemented as a carbon fiber-reinforced plastic according to any of Aspects 6 to 9 described below. The carbon fiber-reinforced plastic according to Aspects 6 to 9 has the similar advantageous effects to those of the corresponding carbon fiber preform according to Aspects 1 to 4.

### [Aspect 6]

There is provided a carbon fiber-reinforced plastic having a plurality of carbon fiber sheets that are stacked. The carbon fiber-reinforced plastic comprises a partial-conducting layer configured to have a resistance area which has higher electric resistance than electric resistance of the carbon fiber sheet in a stacking direction of the carbon fiber sheets, and a conductive area which has lower electric resistance than the electric resistance of the resistance area in the stacking direction. The resistance area and the conductive area are distributed in a surface direction orthogonal to the stacking direction. The partial-conducting layer is arranged at least in one of a location between at least one pair of adjacent carbon fiber sheets out of the plurality of carbon fiber sheets and a location on a surface layer of the carbon fiber-reinforced plastic.

According to one embodiment, the partial-conducting layer may be arranged at least in one of the location between at least one pair of adjacent carbon fiber sheets out of the plurality of carbon fiber sheets and a location on a surface layer of one or more carbon fiber sheets out of the plurality of carbon fiber sheets.

### [Aspect 7]

In the carbon fiber-reinforced plastic according to Aspect 6, the partial-conducting layer may be made of an insulating sheet, and the conductive area may include an opening formed to pass through the insulating sheet in the stacking direction.

### [Aspect 8]

In the carbon fiber-reinforced plastic according to either Aspect 6 or Aspect 7, the conductive area may have an area that is greater than 1% of an entire area of the carbon fiber sheet.

### [Aspect 9]

In the carbon fiber-reinforced plastic according to any one of Aspects 6 to 8, the conductive area may have an area that is not greater than 20% of an entire area of the carbon fiber sheet.

The invention may be implemented as a manufacturing method of a carbon fiber preform according to any one of Aspects 10 to 13 described below. The manufacturing method according to Aspects 10 to 13 has the similar advantageous effects to those of corresponding Aspect 3, Aspect 2, Aspect 4 and Aspect 5. The invention may also be implemented as a manufacturing method of a carbon fiber-reinforced plastic.

### [Aspect 10]

There is provided a manufacturing method of a carbon fiber preform, comprising: providing a layered structure formed by stacking an insulating sheet and a plurality of carbon fiber sheets by means of an adhesive resin having thermal plasticity; placing the layered structure between two molds that are arranged to face each other and serve as electrodes to apply a voltage to the layered structure of the insulating sheet and the plurality of carbon fiber sheets; and transferring a mold shape defined by the two molds to the layered structure. The manufacturing method of the carbon fiber preform comprises the steps of: providing the layered structure using, as the insulating sheet, an insulating sheet having an opening formed to pass through the insulating sheet in a direction of the stacking, and locating the layered structure between the two molds; and applying a pressure to the layered structure in the direction of the stacking with the two molds, while applying a voltage to the two molds to apply electric current to the layered structure and cause the plurality of carbon fiber sheets to generate heat, so as to melt and fix the adhesive resin in a conductive area including the opening and in an area corresponding to periphery of the conductive area and thereby bond the plurality of carbon fiber sheets to each other by means of the adhesive resin.

### [Aspect 11]

In the manufacturing method of the carbon fiber preform according to Aspect 10, the step of bonding the plurality of carbon fiber sheets to each other may be performed without melting the adhesive resin in at least a partial area other than the conductive area.

The step of bonding the plurality of carbon fiber sheets to each other may melt the adhesive resin in another part of the conductive area.

### [Aspect 12]

In the manufacturing method of the carbon fiber perform according to either Aspect 10 or Aspect 11, the opening may have an opening area that is greater than 1% of an entire area of the carbon fiber sheet.

### [Aspect 13]

In the manufacturing method of the carbon fiber preform according to any one of Aspects 10 to 12, the opening may have an opening area that is not greater than 20% of an entire area of the carbon fiber sheet.

### Brief Description of the Drawings

Fig. 1 is a diagram illustrating the appearance of a preform 20 as an embodiment of the carbon fiber preform of the invention;
Fig. 2 is a diagram schematically illustrating the cross sectional structure of the preform 20;
Fig. 3 is a flowchart showing a procedure of manufacturing the preform 20;
Fig. 4 is a diagram illustrating the structure of an insulating sheet 40;
Fig. 5 is a diagram illustrating a layered structure 60;
Fig. 6 is a diagram illustrating a state of applying a voltage along with application of a pressure to the layered structure 60 located in a mold 70;
Fig. 7 is a table showing the relationship between the opening area ratio of openings 41 and the required electric current;
Fig. 8 is a diagram illustrating the structure of an insulating sheet 140 according to a modification;
Fig. 9 is a diagram illustrating the structure of an insulating sheet 240 according to another modification; and
Fig. 10 is a diagram illustrating the structure of a partly-conducting woven fabric 90 according to yet another modification.

### Mode for Carrying Out the Invention

### A. Embodiment

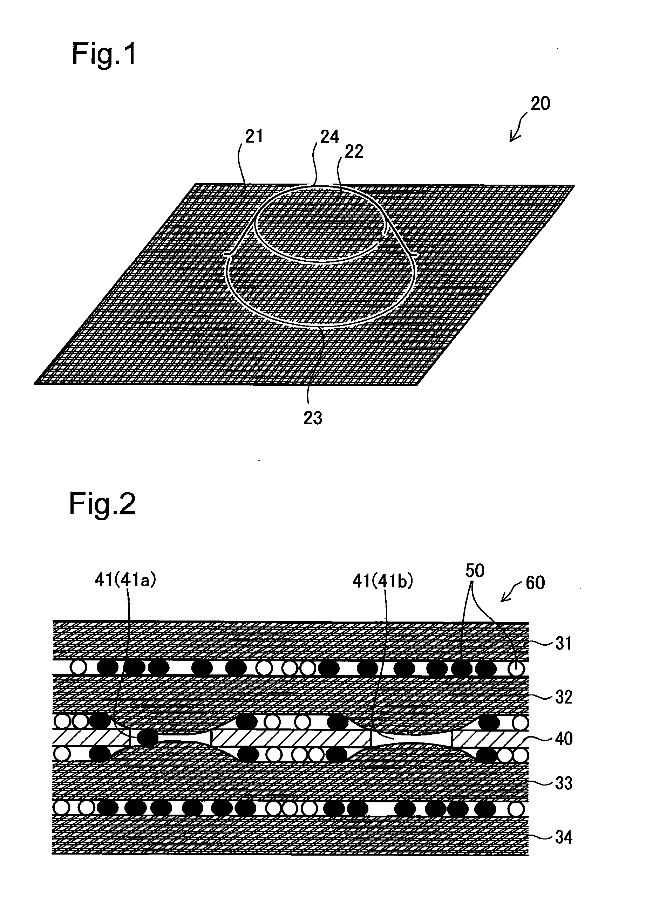

Fig. 1 illustrates the schematic structure of a preform 20 as one embodiment of the carbon fiber preform of the invention. The preform 20 is used to manufacture carbon fiber-reinforced plastic. The carbon fiber-reinforced plastic may be manufactured by, for example, using RTM (resin transfer molding) method. More specifically, the method locates the preform 20 in a mold with a cavity in a specific shape corresponding to the shape of the preform 20. The method subsequently injects a thermosetting resin into the cavity to impregnate the preform 20 with the thermosetting resin and then heats the mold. This results in completing carbon fiber-reinforced plastic. The shape of the preform corresponds to the shape of the carbon fiber-reinforced plastic as the completed product. According to this embodiment, the preform 20 includes a flat portion 21 and a protruded portion 22.

The flat portion 21 is a flat plate-like section. The outer periphery of the flat portion 21 has a rectangular shape. The protruded portion 22 is a section protruded in one direction from the flat portion 21. The protruded portion 22 of the preform 20 has a thickness substantially equal to the thickness of the flat portion 21. Accordingly, the preform 20 has a cavity formed on the other surface opposite to the protruded surface where the protruded portion 22 is formed to have a shape corresponding to the shape of the protruded portion 22. The protruded portion 22 has a nearly circular flat top surface protruded concentrically from a clearly circular base end 23. In other words, the protruded portion 22 has a nearly circular truncated cone shape. The boundary between the top surface and a side surface of the protruded portion 22 is called top end 24. The preform 20 may be in any desired shape.

Fig. 2 schematically illustrates the cross sectional structure of the preform 20. Fig. 2 illustrates the cross section when the preform 20 is cut in the thickness direction. In order to facilitate the technical understanding, the sizes and the thicknesses of the respective components illustrated in Fig. 2 do not necessarily reflect their actual sizes and thicknesses. The preform 20 has a multi-layered structure. More specifically, the preform 20 has a layered structure of four carbon fiber sheets 31 to 34 and one insulating sheet 40. The direction in which the carbon fiber sheets 31 to 34 and the insulating sheet 40 are stacked is called "stacking direction."

The carbon fiber sheets 31 to 34 are sheet-like members of woven carbon fiber according to this embodiment. The carbon fiber sheet is a woven fabric made of carbon fiber according to this embodiment. The carbon fiber sheet is, however, not limited to the form of this embodiment. For example, the form of the carbon fiber sheet may be any of: (i) woven fabric; (ii) knitted fabric; (iii) braided fabric; (iv) nonwoven fabric; (v) unidirectional sheet obtained by stabilizing a reinforcing fiber sheet of aligned in one direction with a binder, an adhesive nonwoven fabric or stitching yarn; and (vi) mat made of randomly-oriented short fiber.

The insulating sheet 40 is a sheet-like member made of an insulating material according to this embodiment. The insulating sheet 40 used according to this embodiment is a mat made of glass fiber. The insulating sheet may, however, be, for example, a natural fiber such as cotton, linen, or bamboo or synthetic fiber such as polyester or nylon. The material of the insulating sheet 40 is not limited to these materials, but any of various other insulating materials may be used for the material of the insulating sheet 40. The form of the insulating material is preferably a sheet form such as woven fabric, nonwoven fabric or film. The form of the insulating material is, however, not limited to the sheet form. Any of various insulating materials that has deformation capability and lets the sheet itself be flexibly deformable in shape may be employed. The insulating material may not be a completely insulating material but may be a material having higher resistance than that of the carbon fiber sheet. According to this embodiment, the insulating sheet 40 is located between the carbon fiber sheet 32 and the carbon fiber sheet 33, i.e., in the middle (third layer) of the five-layered structure of the carbon fiber sheets 31 to 34 and the insulating sheet 40.

The insulating sheet 40 has a plurality of openings 41 formed therein. According to this embodiment, the openings 41 are through holes formed to pass through the insulating sheet 40 in the thickness direction (stacking direction).

An adhesive resin 50 is present between the respective layers of the carbon fiber sheets 31 to 34 and the insulating sheet 40. In Fig. 2, the adhesive resin 50 is schematically shown by circles. According to this embodiment, the adhesive resin 50 is distributed in the surface direction of the carbon fiber sheets 31 to 34 and the insulating sheet 40 (hereinafter simply called "surface direction"). The adhesive resin 50 is used to bond the carbon fiber sheets to one another. For example, the adhesive resin 50 used may be a material that is melted by heating and is solidified by cooling to exert the adhesive function of bonding the respective layers. The adhesive resin 50 is also called "tackifier." According to this embodiment, the adhesive resin 50 is a particulate thermoplastic resin. Usable examples of the thermoplastic resin include polyolefin resin, styrene-based resin, nylon resin, polyamide resin and polyurethane resin. The thermoplastic resin used for the adhesive resin 50 is, however, not limited to these thermoplastic resins but may be any of various other thermoplastic resins. The thermoplastic resin used for the adhesive resin 50 may be a combination of these thermoplastic resins. Additionally, the material of the adhesive resin 50 is not limited to the thermoplastic resin. For example, a thermosetting resin may be used as the material of the adhesive resin 50. Examples of the thermosetting resin include epoxy resin, phenolic resin and unsaturated polyester resin. The form of the adhesive resin 50 is not limited to the particulate form but may be set arbitrarily. For example, the adhesive resin 50 may be in a fibrous form. Moreover, the adhesive resin 50 may be present in any location other than the inter-layer location, and the form of the adhesive resin 50 is not specifically limited. For example, the adhesive resin 50 may be distributed at random in the carbon fiber sheet. When the adhesive resin 50 is in the fibrous form, the adhesive resin fiber may be aligned in the carbon fiber sheet, the adhesive resin fiber may be used as an auxiliary yarn (warp yarn or weft yarn) of woven fabric, or the carbon fiber sheet may be stitched with the adhesive resin fiber.

In the preform 20, the respective layers of the carbon fiber sheets 31 to 34 and the insulating sheet 40 are bonded to one another in the surface direction at the positions corresponding to the openings 41 and their peripheries by means of the adhesive resin 50. More specifically, the adhesive resin 50 present at the positions corresponding to the openings 41 and their peripheries are melted and cooled to be solidified, so as to exert the adhesive function. Substantially no electric current is applied to other areas having high electric resistance, due to the high electric resistance, so that the adhesive resin 50 is substantially not melted. In these other areas, the respective layers of the carbon fiber sheets 31 to 34 and the insulating sheet 40 are not bonded at all or are only partly bonded. Such partial bonding, however, does not reach the level that exerts the adhesive force to retain the shape of the preform 20. In Fig. 2, closed circles represent the adhesive resin 50 exerting the adhesive function. Such configuration is attributed to the manufacturing method of the preform 20. The manufacturing method of the preform 20 will be described later.

In the illustration of Fig. 2, the carbon fiber sheet 32 and the carbon fiber sheet 33 appear to be not in direct contact with each other. More specifically, the carbon fiber sheet 32 and the carbon fiber sheet 33 are illustrated to be not in contact with each other in the areas where the adhesive resin 50 is not present between the carbon fiber sheet 32 and the carbon fiber sheet 33. In the actual state, however, the orientation of the fibers in the carbon fiber sheets 32 and 33 is not completely fixed along the in-plane direction of the sheet. Accordingly the carbon fiber sheets 32 and 33 are generally in contact with each other by means of part of the fibers extended in the stacking direction. The same is applied to between the carbon fiber sheets 31 and 32 and between the carbon fiber sheets 33 and 34.

Inside of an opening 41a formed in the insulating sheet 40, the carbon fiber sheet 32 and the carbon fiber sheet 33 located on both sides of the insulating sheet 40 are bonded to each other by means of the adhesive resin 50 exerting the adhesive function. Inside of an opening 41b, on the other hand, the carbon fiber sheet 32 and the carbon fiber sheet 33 are not bonded to each other. This is attributed to the absence of the adhesive resin 50 exerting the adhesive function inside of the opening 41b. In other words, the carbon fiber sheet 32 and the carbon fiber sheet 33 may not be necessarily bonded to each other by means of the adhesive resin 50 inside of all the openings 41 according to this embodiment. The configuration that the adjacent carbon fiber sheets are bonded to each other in only part of the openings is implemented by reducing the amount of the adhesive resin used or by unevenly distributing the adhesive rein in the surface direction between layers.

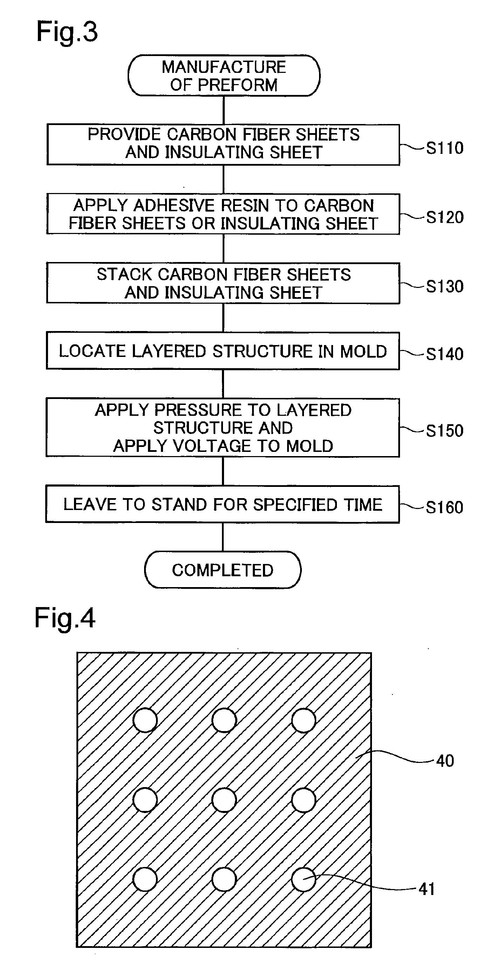

Fig. 3 shows a process of manufacturing the preform 20 described above. The manufacturing process of the preform 20 first provides the carbon fiber sheets 31 to 34 and the insulating sheet 40 (step S110). At this stage, the carbon fiber sheets 31 to 34 and the insulating sheet 40 do not have the shape of the preform 20 shown in Fig. 1. More specifically, the carbon fiber sheets 31 to 34 and the insulating sheet 40 have sheet surfaces that are entirely flat and in a rectangular shape. According to this embodiment, the carbon fiber sheets 31 to 34 and the insulating sheet 40 have substantially the same areas. The carbon fiber sheets 31 to 34 and the insulating sheet 40 may, however, not necessarily have substantially the same areas. For example, the area of the carbon fiber sheets 31 to 34 may be larger or may be smaller than the area of the insulating sheet 40.

The carbon fiber sheets 31 to 34 have the unit area weight or the weight per unit area of 200 g/m² according to this embodiment. The insulating sheet 40 has the weight per unit area of 60 g/m² according to this embodiment. The unit area weights of the carbon fiber sheets 31 to 34 and the insulating sheet 40 may be set in the range of such relationship between the unit area weights of the carbon fiber sheets 31 to 34 and the insulating sheet 40 that the carbon fiber sheet 32 and the carbon fiber sheet 34 are brought into contact with each other inside of the openings 41 to have electrical continuity at step S150 described later. For example, this relationship is achieved by setting the unit area weight of the carbon fiber sheets 31 to 34 to 70 to 500 g/m² and the unit area weight of the insulating sheet 40 to 30 to 180 g/m².

Fig. 4 illustrates a concrete example of the insulating sheet 40 provided at step S110. The sheet surface of the insulating sheet 40 is in a rectangular shape. The insulating sheet 40 has a plurality of the openings 41 formed to pass through the sheet surface (Fig. 2) as described above. According to the embodiment, the respective openings 41 are formed in a circular shape. According to the embodiment, the respective openings 41 are distributed at substantially equal intervals on the sheet surface of the insulating sheet 40. The size of the respective openings 41 is 4.5 mm in diameter (about 16 mm² in area) according to this embodiment. The size of the openings 41 may, however, be set to such a size that the carbon fiber sheet 32 and the carbon fiber sheet 34 are brought into contact with each other inside of the openings 41 to have electrical continuity at step S150 described later. For example, setting the area of the respective openings 41 to not less than 10 mm2 ensures the electrical continuity.

According to this embodiment, the ratio of the total area of the respective openings 41 to the area of each of the carbon fiber sheets 31 to 34 (area of one sheet) (hereinafter referred to as "opening area ratio") is 6%. It is desirable to control the opening area ratio to greater than 1%. It is also desirable to control the opening area ratio to not greater than 20%. The reason of such control will be described later. When the area of the insulating sheet 40 is smaller than the area of the carbon fiber sheets 31 to 34, the sum of the total area of the respective openings 41 and a difference (positive value) between the area of the carbon fiber sheets 31 to 34 and the area of the insulating sheet 40 to the area of each of the carbon fiber sheets 31 to 34 is specified as the "opening area ratio."

The description is now returned to the manufacturing process of the preform 20 (Fig. 3). After providing the carbon fiber sheets 31 to 34 and the insulating sheet 40, the process applies the adhesive resin 50 on the carbon fiber sheets 31 to 34 (step S120). The adhesive resin 50 may be applied by a technique such as spraying or coating. The adhesive resin 50 may be applied on both surfaces or only on one surface of the carbon fiber sheets 31 to 34. The adhesive resin 50 may be applied on the insulating sheet 40, instead of on the carbon fiber sheets 32 and 33. In other words, the adhesive resin 50 may be applied such that the adhesive resin 50 is present between the respective layers in the stack of the carbon fiber sheets 31 to 34 and the insulating sheet 40. The adhesive resin 50 is, however, not applied on the surfaces of the layered structure 60 formed by stacking the carbon fiber sheets 31 to 34 and the insulating sheet 40, i.e., one of the two surfaces of the carbon fiber sheet 31 on the opposite side to the insulating sheet 40 and one of the two surfaces of the carbon fiber sheet 34 on the opposite side to the insulating sheet 40. The application amount of the adhesive resin 50 may be set to such an amount that the entire surface of the carbon fiber sheets 31 to 34 and the insulating sheet 40 is not covered with the adhesive resin 50, i.e., such an amount that ensures electrical continuity in the stacking direction of the layered structure 60 at step S150 described later. The application amount of the adhesive resin 50 is preferably such an amount that the adhesive resin 50 is certainly applied at the respective positions corresponding to the openings 41. The carbon fiber sheets 31 to 34 or the insulating sheet 40 may be impregnated with the adhesive resin 50. Alternatively the insulating sheet 40 itself may be made of the adhesive resin. In such cases, the carbon fiber sheets 31 to 34 or the insulating sheet 40 provided at step S110 contains the adhesive resin, so that step S120 may be omitted.

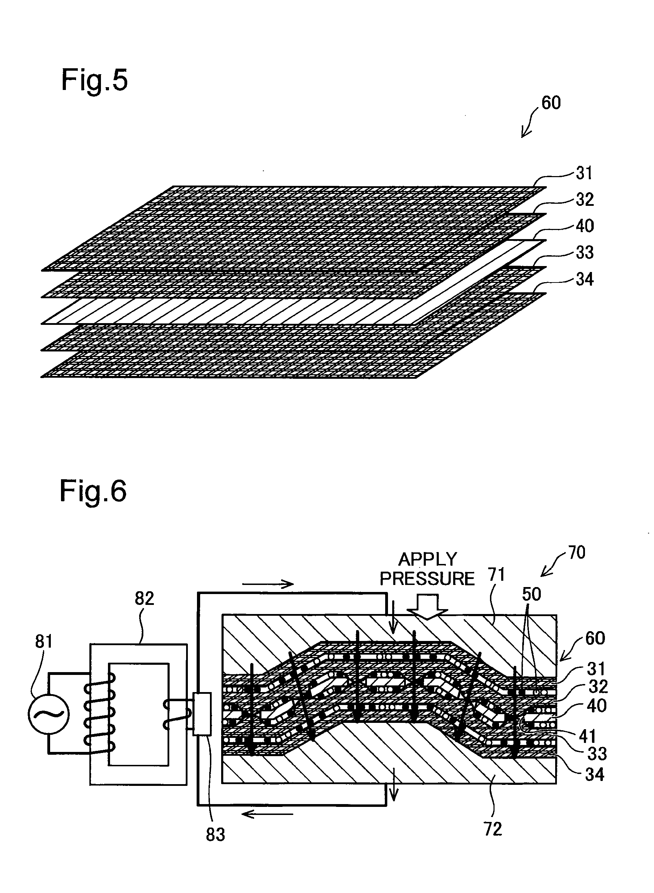

Fig. 5 illustrates a process of producing the layered structure 60 by stacking the carbon fiber sheets 31 to 34 and the insulating sheet 40. After applying the adhesive resin 50, the process subsequently stacks the carbon fiber sheets 31 to 34 and the insulating sheet 40 to produce the layered structure 60 (step S130 in Fig. 3) as shown in Fig. 5. The adhesive resin 50 is omitted from the illustration of Fig. 5.

Fig. 6 illustrates a process of locating the layered structure 60 in a mold 70. After producing the layered structure 60, the process subsequently locates the layered structure 60 in the mold 70 (step S140 in Fig. 3) as shown in Fig. 6. The mold 70 includes an upper mold 71 and a lower mold 72. The upper mold 71 and the lower mold 72 have shapes corresponding to the shape of the preform 20 (Fig. 1). The upper mold 71 and the lower mold 72 are connected to a power source 81 via a transformer 82. The upper mold 71 and the lower mold 72 serve as a press mold. In other words, the upper mold 71 and the lower mold 72 serve to transfer their own shapes to the layered structure 60. The upper mold 71 and the lower mold 72 also work as electrodes. The voltage of the power source 81 is adjusted by the transformer 82 and is applied to the upper mold 71 and the lower mold 72 via a rectifier 83.

After locating the layered structure 60 in the mold 70, the process applies a pressure to the layered structure 60 in the stacking direction, while applying a voltage to the upper mold 71 and the lower mold 72 (step S150 in Fig. 3). According to this embodiment, the application of pressure applies a pressing force to the upper mold 71 in the direction toward the lower mold 72 by an actuator such as hydraulic cylinder (illustration is omitted from Fig. 6). The pressing force may alternatively be applied to both the upper mold 71 and the lower mold 72 or to only the lower mold 72. Application of the pressure in the stacking direction press-molds the layered structure 60 to the shape of the preform 20.

Applying the voltage to the upper mold 71 and the lower mold 72 causes electric current to flow through the layered structure 60 in the stacking direction. The electric current flowing through the layered structure 60 causes the carbon fiber sheets 31 to 34 to generate heat by the contact resistance. The application of pressure to the upper mold 71 and the lower mold 72 in the mold 70 in the stacking direction increases the contact between the carbon fiber sheet 31 and the carbon fiber sheet 32 and ensures the electrical continuity between the carbon fiber sheet 31 and the carbon fiber sheet 32 in the stacking direction. The same is applied to between the carbon fiber sheet 33 and the carbon fiber sheet 34. Application of the pressure to the layered structure 60 across the upper mold 71 and the lower mold 72 causes parts of the carbon fiber sheet 32 and the carbon fiber sheet 33 located on both sides of the insulating sheet 40 to enter inside of the openings 41 formed in the insulating sheet 40. As a result, the carbon fiber sheet 32 and the carbon fiber sheet 33 are certainly brought into contact with each other inside of the openings 41. This ensures the electrical continuity between the carbon fiber sheet 32 and the carbon fiber sheet 33 in the stacking direction.

As clearly understood from the above description, at step S150, electric current is flowed through the layered structure 60 in the stacking direction by pathways going through the openings 41 formed in the insulating sheet 40 as shown by thick black arrows in Fig. 6. Accordingly the carbon fiber sheets 31 to 34 generate heat in the surface direction, mainly at the positions corresponding to the openings 41 and the positions corresponding to their peripheries. As a result, the adhesive resin 50 present in the areas corresponding to the openings 41 and in the areas corresponding to their peripheries is melted in the surface direction by the heat generated by the carbon fiber sheets 31 to 34. Substantially no electric current is applied to areas other than the areas corresponding to the openings 41 and their peripheries, so that the adhesive resin 50 present in such other layers is substantially not melted. The application of the voltage to the layered structure 60 continues for a required time, i.e., for a time required to melt the adhesive resin 50 at the positions described above. This required time is generally about several seconds.

After applying the voltage for the required time, the process subsequently leaves to stand the layered structure 60 and the mol 70 for a specified time (step S160). The specified time here is a time required to cool and solidify the molten adhesive resin 50. This specified time is generally about several seconds. While the specified time has elapsed, the adhesive resin 50 is solidified to bond the adjacent layers of the carbon fiber sheets 31 to 34 and the insulating sheet 40 to each other in the areas corresponding to the openings 41 and their peripheries on the entire surface. The description of "the areas corresponding to the openings 41 and their peripheries" means any of "only the areas corresponding to the openings 41," "only the areas corresponding to the peripheries of the openings 41" and "both the areas corresponding to the openings 41 and the areas corresponding to their peripheries.". For example, the following situation may be expected according to some application density of the adhesive resin 50 and some opening area of the openings 41: the adhesive resin 50 is not present in the areas corresponding to the openings 41 but is present only in the areas corresponding to the peripheries of the openings 41. In such cases, the adjacent layers of the carbon fiber sheets 31 to 34 and the insulating sheet 40 may be bonded to each other only in the areas corresponding to the peripheries of the openings 41.

The adjacent layers of the carbon fiber sheets 31 to 34 and the insulating sheet 40 are bonded to each other as described above, so that the preform 20 is completed. This method causes the layered structure 60 to generate heat by applying electric current and does not need to heat the mold 70. The mold can thus be removed immediately after completion of the preform 20.

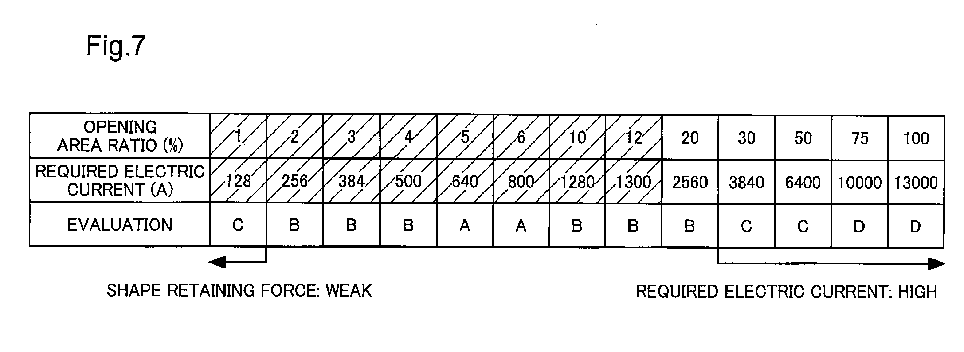

Fig. 7 shows the relationship between the opening area ratio and the electric current required for bonding of the layered structure 60 (carbon fiber sheets 31 to 34 and insulating layer 40) (hereinafter referred to as "required electric current" with regard to the varying opening area ratio. Out of the illustrated data, data on the opening area ratios of 1% to 12% are observed data (hatched in Fig. 7). This means that the required electric currents at the opening area ratios of 1% to 12% are electric currents actually required for bonding. The experiment conditions as the preconditions of the observed data are given below. Data on the opening area ratios of 20% or higher are results of calculation based on the observed data.

### (Experiment Conditions)

Area of carbon fiber sheets 31 to 34: 40000 mm²
Area of one opening 41: about 16 mm² (diameter of 4.5 mm)
Current application time: 3 seconds

According to the experiment data shown in Fig. 7, the required electric current increases with an increase in opening area ratio. As shown in Fig. 7, the required electric current was 128 A (amperes) at the opening area ratio of 1%. The required electric current was 256 A, 384 A, 500 A, 640 A, 800 A, 1280 A and 1300 A respectively at the opening area ratios of 2%, 3%, 4%, 5%, 6%, 10% and 12%. At the opening area ratio of 1%, the experiment showed that the respective layers of the layered structure 60 could be bonded to each other, but the adhesive force of the respective layers of the layered structure 60 was weak and could not retain the shape of the perform 20 after elapse of a certain time. When the opening area ratio was set to 2% or higher, on the other hand, the experiment showed that the respective layers of the layered structure 60 were bonded by the good adhesive force and were not readily peeled off to retain the shape of the preform 20. According to these experiment results, the opening area ratio is preferably greater than 1%. Setting the opening area ratio to greater than 1% enables the respective layers of the layered structure 60 to be bonded to each other to such an extent that retains the shape of the preform 20.

According to the calculation results, the required electric current was 2560A at the opening area ratio of 20%. The calculation results also showed that the required electric current was 3840 A and 6400 A respectively at the opening area ratios of 30% and 50%. When the required electric current exceeds 3000 A, upgrading the capacity of the power source used is needed. This results in size expansion of the equipment and increase in energy consumption. The opening area ratio is thus preferably not greater than 20%. This reduces the power consumption required for conduction heating and contributes to reduction of cost and saving of energy consumption. The calculation result gave the required electric current over 10000A at the opening area ratios of or greater than 50%. Such setting is unpractical in terms of saving of the cost and the energy consumption.

According to the above description, the evaluation grade is "C" (fair) at the opening area ratio of 1% and in the range of not less than 30% and less than 75%. The evaluation grade is "D" (unpractical) at the opening area ratio of not less than 75%. The evaluation grade is "B" (good) at the opening area ratio in the range of greater than 1% and not greater than 20%. The evaluation grade is "A" (excellent) at the opening area ratio in the range of not less than 5% and not greater than 6%, which certainly provides the adhesive force and the shape retaining force while reducing the required electric current to some extent.

The preform 20 described above may be manufactured by conduction heating method. More specifically, the insulating sheet 40 has the openings 41, and the electric current is applied to the layered structure 60 in the stacking direction via the openings 41, so as to melt the adhesive resin 50 and bond the adjacent layers of the carbon fiber sheets 31 to 34 and the insulating sheet 40 to each other. The conduction heating method achieves bonding in a relatively short time and thereby shortens the manufacturing time of the insulating sheet 40. The temperature of the molten adhesive resin 50 decreases in a short time, so that no additional cooling step is needed. Only one pair of electrodes provided in the stacking direction are sufficient for the conduction heating method. Accordingly, the upper mold 71 and the lower mold 72 can be used as the electrodes for the conduction heating method. This enables the preform 20 to be manufactured by the equipment of the simplified configuration. Additionally, the conduction heating method does not require any special equipment, unlike the induction heating method or the ultrasonic welding method. This manufacturing method preferably enables the preform 20 in a three-dimensional shape to be manufactured.

The openings 41 serve as "the conductive area having the lower electric resistance in the stacking direction than the resistance area" and as the "current-carrying conductive area". Here "current-carrying" is not limited to the current-carrying configuration without application of an external force to the preform 20. For example, the configuration that the carbon fiber sheet 32 and the carbon fiber sheet 33 are not in contact with each other inside of the openings 41 but are brought into contact with each other to have electrical continuity by application of a pressure to the preform 20 in the stacking direction is included in the "current-carrying" configuration. When the area (S1) of the insulating sheet 40 is smaller than the area (S2) of the carbon fiber sheets 31 to 34, a difference area (area of S2-S1) that is included in the location (area) of the carbon fiber sheets 31 to 34 but is outside of the insulating sheet 40 may also be regarded as "current-carrying conductive area."

In the preform 20, the carbon fiber sheets 31 to 34 and the insulating sheet 40 are bonded to one another in the surface direction in the areas corresponding to the openings 41 formed in the insulating sheet 40 and in the areas corresponding to their peripheries but are not bonded to one another in the other areas. Compared with the configuration of bonding the entire surface of the carbon fiber sheets, this configuration ensures the repulsive force of the preform 20 in the stacking direction.

The plurality of openings 41 are formed to be distributed in the surface direction of the insulating sheet 40. This causes the carbon fiber sheets 31 to 34 and the insulating sheet 40 to be bonded to one another at the distributed locations and thereby facilitates retaining the shape of the preform 20.

In the preform 20, the amount of conduction heating, i.e., the amount of energy required for bonding the layered structure 60, can be controlled by adjusting the opening area ratio.

This preform 20 may be used to produce carbon fiber-reinforced plastic including the insulating sheet 40 between the adjacent layers of the carbon fiber sheets 31 to 34. In the case of producing carbon fiber-reinforced plastic by the RTM method using the preform 20, the insulating sheet 40 also serves to accelerate spread of the thermosetting resin injected into the mold in the surface direction. This results in increasing the impregnation rate of the thermosetting resin or enhancing the evenness of impregnation of the thermosetting resin.

### B. Modifications

### B-1. Modification 1

In the embodiment described above, the insulating sheet 40 is located between the carbon fiber sheet 32 and the carbon fiber sheet 33. The location of the insulating sheet 40 is, however, not limited to this arrangement. The insulating sheet 40 may be arranged between any adjacent layers of the carbon fiber sheets 31 to 34. Moreover, the insulating sheet 40 may not be necessarily arranged between adjacent layers of the carbon fiber sheets 31 to 34. The insulating sheet 40 may be arranged on the surface of the carbon fiber sheets 31 to 34. For example, the layered structure 60 may be formed by stacking the insulating sheet 40 and the carbon fiber sheets 31 to 34 in this order. As long as the plurality of carbon fiber sheets are provided, the number of the carbon fiber sheets may be set to any number of not less than 2.

### B-2. Modification 2

In the embodiment described above, the layered structure 60 is produced by stacking a plurality of carbon fiber sheets 31 to 34 and one insulating sheet 40. The layered structure 60 may, however, include a plurality of the insulating sheets 40. For example, the insulating sheets 40 may be located between the carbon fiber sheet 31 and the carbon fiber sheet 32 and between the carbon fiber sheet 33 and the carbon fiber sheet 34.

### B-3. Modification 3

In the embodiment described above, the plurality of openings 41 formed in the insulating sheet 40 are arranged to be equally distributed in the surface direction. The arrangement of the plurality of openings 41 is, however, not limited to this embodiment. The arrangement of the plurality of openings 41 may be set arbitrarily. The plurality of openings 41 may not necessarily have an identical opening area but may have arbitrarily set opening areas. The arrangement and the opening areas of the openings 41 may be set adequately according to the shape of the preform 20 manufactured.

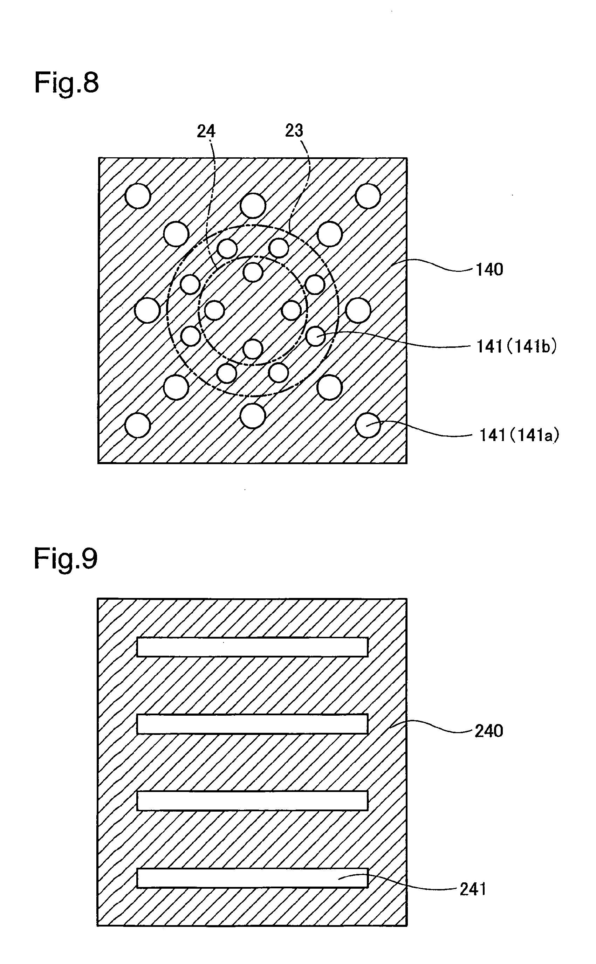

Fig. 8 illustrates the structure of an insulating sheet 140 according to a modification. A preform manufactured by using the insulating sheet 140 has the same shape as that of the preform 20 of the above embodiment (Fig. 1). The insulating sheet 140 has a plurality of openings 141 formed therein. In the insulating sheet 140 shown in Fig. 8, chain double dashed lines represent the positions where the base end 23 and the top end 24 (Fig. 1) are formed respectively. In this illustrated example, the openings 141 are formed at the higher density in the periphery of the positions where the base end 23 and the top end 24 are formed, than the other areas.

In this manner, the openings may be arranged intensively in the periphery of the area that is deformed by processing from the initial state prior to shape transfer (shape of entirely flat sheet). This arrangement causes the periphery of the deformed area to be intensively bonded in the layered structure and thereby facilitates retaining the post-processing shape. Openings 141b formed in an inside area of the base end 23 which is a relatively narrow area are set to have a smaller area than the area of openings 141a formed in an outside area of the base end 23 which is a relatively wide area. Adjusting the areas of the openings according to the processing shape of the preform in this manner enhances the flexibility in arrangement of the bonding positions. In the structure of Fig. 8, the openings 141 are arranged in the periphery of the base end 23 and the top end 24. The arrangement of the openings 141 at the positions where the base end 23 and the top end 24 are formed has the similar advantageous effects.

### B-4. Modification 4

In the embodiment described above, the openings 41 formed in the insulating sheet 40 have the circular shape. The shape of the openings 41 may, however, be set arbitrarily. Fig. 9 illustrates the structure of an insulating sheet 240 according to another modification. In the illustrated example, the insulating sheet 240 has a plurality of openings 241 formed in a rectangular shape. The shape of the openings 241 may be set according to the processing shape of the preform 20 to be manufactured, like Modification 3 described above. For example, the openings 241 may be formed along the area that is deformed by processing from the initial state on the entire surface of the layered structure. More specifically, the openings 241 may be formed, for example, in a circular arrangement along the outer periphery of the base end 23.

### B-5. Modification 5

The above embodiment describes the configuration that the insulating sheet 40 is located between the adjacent layers of the carbon fiber sheets 31 to 34. The insulating sheet 40 may be replaced with a partial-conducting sheet. The "partial-conducting sheet" denotes a sheet including an insulating area made of an insulating material and a conductive area made of a conductive material in the total area of the sheet. The insulating area and the conductive area are located at different positions in the surface direction. For example, the partial-conducting sheet may be provided as a sheet using the conductive material at the positions of the openings 41 of the insulating sheet 40. Carbon fiber may be used as the conductive material.

### B-6. Modification 6

The above embodiment describes the configuration that the insulating sheet 40 is located between the adjacent layers of the carbon fiber sheets 31 to 34. The insulating sheet 40 may be replaced with a material having higher electric resistance in the stacking direction than that of the carbon fiber sheet. The electric resistance of one layer of the carbon fiber sheet in the thickness direction is generally in the range of 10 to 300 Ω/cm² (under the conditions of the carbon fiber weight per unit area of 330 g/m², the number of carbon fibers of 1200, and pressing pressure of 0.1 to 0.5 MPa). This configuration ensures the advantageous effects described above to some extent. The partial-conducting sheet described in Modification 5 may be provided as a sheet having a high resistance area made of a material having the higher electric resistance in the stacking direction than that of the carbon fiber sheet and a conductive area.

### B-7. Modification 7

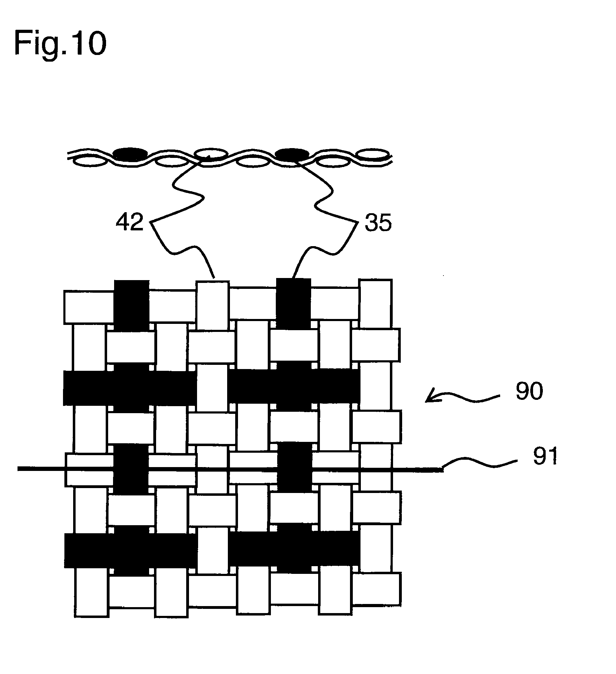

Fig. 10 is a diagram illustrating the structure of a partial-conducting woven fabric 90 according to yet another modification. The lower drawing of Fig. 10 shows a plan view of the partial-conducting woven fabric 90 as the partial-conducting layer. The upper drawing of Fig. 10 shows a cross sectional view of the partial-conducting woven fabric 90 taken on a line 91 in the lower drawing. In the above embodiment, the structure of forming the openings 41 in the insulating sheet 40 made of glass fiber is provided as the partial-conducting layer. As shown in Fig. 10, the partial-conducting woven fabric 90 having carbon fiber 35 partly interwoven in the fabric texture mainly made of glass fiber 42 may be provided as the partial-conducting layer. Partial interweaving of the carbon fiber 35 in the fabric texture ensures the pathway where the electric current flows. The area in which carbon fiber is present forms a conductive area, while the area in which no carbon fiber forms a resistance area. As an additional advantageous effect, the partial-conducting layer itself is made of the reinforcing fibers such as glass fiber and carbon fiber. This contributes to increase the strength of a component made of the resulting fiber-reinforced plastic.

The foregoing describes some embodiments of the invention. The invention is, however, not limited to these embodiments, but a multiplicity of variations and modifications may be made to the embodiments without departing from the scope of the invention. For example, the components of the respective aspects and the components of the embodiments described above may be adequately combined, omitted or conceptualized in a generic manner in any aspect to solve at least part of the objects described above or in any aspect to achieve at least part of the advantageous effects described above.

### Reference Signs List

- 20: Preform
- 21: Flat portion
- 22: Protruded portion
- 23: Base end
- 24: Top end
- 31 to 34: Carbon fiber sheets
- 35: Carbon fiber
- 40, 140, 240: Insulating sheet
- 41, 41a, 41b, 141, 141a, 141b, 241: Openings
- 42: Glass fiber
- 50: Adhesive resin
- 60: Layered structure
- 70: Mold
- 71: Upper mold
- 72: Lower mold
- 81: Power source
- 82: Transformer
- 83: Rectifier
- 90: Partial-conducting woven fabric
- 91: Cross section line

## Claims

1. A carbon fiber preform having a plurality of carbon fiber sheets that are stacked and are bonded to each other by means of an adhesive resin having thermal plasticity, the carbon fiber preform comprising:
a partial-conducting layer configured to have a resistance area which has higher electric resistance than electric resistance of the carbon fiber sheet in a stacking direction of the carbon fiber sheets, and a conductive area which has lower electric resistance than the electric resistance of the resistance area in the stacking direction, wherein the resistance area and the conductive area are distributed in a surface direction orthogonal to the stacking direction, the partial-conducting layer being arranged at least in one of a location between at least one pair of adjacent carbon fiber sheets out of the plurality of carbon fiber sheets and a location on a surface layer of the carbon fiber preform, wherein
the plurality of carbon fiber sheets are bonded to each other by means of the adhesive resin in the conductive area provided in the partial-conducting layer and in an area corresponding to periphery of the conductive area.

2. The carbon fiber preform according to claim 1,
wherein the plurality of carbon fiber sheets are not bonded to each other by means of the adhesive resin in at least part of the resistance area.

3. The carbon fiber preform according to either claim 1 or claim 2,
wherein the partial-conducting layer is made of an insulating sheet, and
the conductive area includes an opening formed to pass through the insulating sheet in the stacking direction.

4. The carbon fiber preform according to any one of claims 1 to 3,
wherein the conductive area has an area that is greater than 1% of an entire area of the carbon fiber sheet.

5. The carbon fiber preform according to any one of claims 1 to 4,
wherein the conductive area has an area that is not greater than 20% of an entire area of the carbon fiber sheet.

6. A carbon fiber-reinforced plastic having a plurality of carbon fiber sheets that are stacked, the carbon fiber-reinforced plastic comprising:
a partial-conducting layer configured to have a resistance area which has higher electric resistance than electric resistance of the carbon fiber sheet in a stacking direction of the carbon fiber sheets, and a conductive area which has lower electric resistance than the electric resistance of the resistance area in the stacking direction, wherein the resistance area and the conductive area are distributed in a surface direction orthogonal to the stacking direction, the partial-conducting layer being arranged at least in one of a location between at least one pair of adjacent carbon fiber sheets out of the plurality of carbon fiber sheets and a location on a surface layer of the carbon fiber-reinforced plastic.

7. The carbon fiber-reinforced plastic according to claim 6,
wherein the partial-conducting layer is made of an insulating sheet, and
the conductive area includes an opening formed to pass through the insulating sheet in the stacking direction.

8. The carbon fiber-reinforced plastic according to either claim 6 or claim 7,
wherein the conductive area has an area that is greater than 1% of an entire area of the carbon fiber sheet.

9. The carbon fiber-reinforced plastic according to any one of claims 6 to 8,
wherein the conductive area has an area that is not greater than 20% of an entire area of the carbon fiber sheet.

10. A manufacturing method of a carbon fiber preform, comprising:
providing a layered structure formed by stacking an insulating sheet and a plurality of carbon fiber sheets by means of an adhesive resin having thermal plasticity;
placing the layered structure between two molds that are arranged to face each other and serve as electrodes to apply a voltage to the layered structure of the insulating sheet and the plurality of carbon fiber sheets; and
transferring a mold shape defined by the two molds to the layered structure,
the manufacturing method of the carbon fiber preform comprising the steps of:
providing the layered structure using, as the insulating sheet, an insulating sheet having an opening formed to pass through the insulating sheet in a direction of the stacking, and locating the layered structure between the two molds; and
applying a pressure to the layered structure in the direction of the stacking with the two molds, while applying a voltage to the two molds to apply electric current to the layered structure and cause the plurality of carbon fiber sheets to generate heat, so as to melt and fix the adhesive resin in a conductive area including the opening and in an area corresponding to periphery of the conductive area and thereby bond the plurality of carbon fiber sheets to each other by means of the adhesive resin.

11. The manufacturing method of the carbon fiber preform according to claim 10,
wherein the step of bonding the plurality of carbon fiber sheets to each other is performed without melting the adhesive resin in at least a partial area other than the conductive area.

12. The manufacturing method of the carbon fiber perform according to either claim 10 or claim 11,
wherein the opening has an opening area that is greater than 1% of an entire area of the carbon fiber sheet.

13. The manufacturing method of the carbon fiber preform according to any one of claims 10 to 12,
wherein the opening has an opening area that is not greater than 20% of an entire area of the carbon fiber sheet.
